# EUROPÄISCHE PATENTANMELDUNG

(11) **EP 2 511 807 A2**
(43) Veröffentlichungstag der Anmeldung: **17.10.2012**
(21) Anmeldenummer: 12163273.1
(22) Anmeldetag: 05.04.2012
(51) Int. Cl.: G06F 3/044, G06F 3/033

(54) **Bedieneinrichtung für ein Elektrogerät**

(30) Priorität: 11.04.2011 DE 102011007112
(71) Anmelder: E.G.O. ELEKTRO-GERÄTEBAU GmbH, 75038 Oberderdingen (DE)
(72) Erfinder: Baier, Martin, 76275 Ettlingen (DE); Gutruf, Philipp, 77815 Bühl (DE)
(74) Vertreter: Patentanwälte Ruff, Wilhelm, Beier, Dauster & Partner

(57) **Zusammenfassung**

Eine Bedieneinrichtung für ein Elektrogerät weist einen flächigen, kapazitiv arbeitenden Touch-Screen mit einer Steuerung auf zur Bedienung durch Bewegen eines aufgelegten Fingers auf dem Touch-Screen. An dem Touch-Screen ist als Halteeinrichtung ein Magnet für ein bewegbares Bedienelement darauf angeordnet zur zusätzlichen Eingabe von Bedien-Befehlen als zusätzliche Bedienung. Das Bedienelement so ausgebildet ist, dass eine Signalübertragung von dem Bedienelement kapazitiv erfolgt bzw. eine Bedienung mittels des Bedienelements von dem Touch-Screen selbst erfassbar ist.

## Beschreibung

### Anwendungsgebiet und Stand der Technik

Die Erfindung betrifft eine Bedieneinrichtung für ein Elektrogerät, beispielsweise ein Kochfeld.

Es ist beispielsweise aus der DE 10 2006 039 235 A1 bekannt, an einem Elektrogerät wie einem Kochfeld als Bedieneinrichtung einen Berührbildschirm bzw. einen sogenannten Touch-Screen zu verwenden. Durch Auflegen und ggf. Bewegen eines Fingers auf dem Touch-Screen erfolgt die Bedienung des Elektrogeräts. Die gesamte Bedienung ist also auf das Auflegen und Bewegen eines Fingers festgelegt und ausgelegt.

### Aufgabe und Lösung

Der Erfindung liegt die Aufgabe zugrunde, eine eingangs genannte Bedieneinrichtung zu schaffen, mit der Probleme des Standes der Technik vermieden werden können und insbesondere bei einem Touch-Screen zusätzlich zu einer Finger-Bedienung noch eine weitere Bedienmöglichkeit eröffnet wird.

Gelöst wird diese Aufgabe durch eine Bedieneinrichtung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Die Bedieneinrichtung weist einen flächigen, kapazitiv arbeitenden Touch-Screen auf. Dessen Leiterbahnen bzw. leitfähigen Flächen sind vorteilhaft mit ITO- oder Carbon-Nanotubes-Schichten realisiert. Kapazitive Sensorelemente einer Bedienfläche können zusammen mit einer Steuerung der Bedieneinrichtung bzw. des Touch-Screen erkennen, auf welchen Punkt des Touch-Screen ein Finger aufgelegt worden ist. Dann wird aufgrund dieses Auflagepunktes bzw. Berührpunktes ein gewünschter Bedien-Befehl erkannt und ausgelöst für das Elektrogerät. Es kann vorteilhaft ein üblicher Touch Screen für TFT-Displays verwendet werden.

Erfindungsgemäß ist an dem Touch-Screen eine Halteeinrichtung für ein bewegbares Bedienelement darauf angeordnet ist bzw. vorgesehen. Dieses bewegbare Bedienelement dient dazu, Bedien-Befehle einzugeben, also entweder alternativ oder zusätzlich zu einer vorgenannten Finger-Bedienung. Das Bedienelement ist so ausgebildet, dass eine Signalübertragung von dem Bedienelement kapazitiv erfolgt bzw. eine Bedienung mittels des Bedienelements von den kapazitiven Sensorelementen selbst erfasst werden kann, die in einer Art Sensormatrix angeordnet sein können. Weitere bzw. zusätzliche Sensoren sind nicht notwendig. Aus der DE 10 2006 054 764 A1 ist eine Bedieneinrichtung bekannt, bei der ein prinzipiell ähnliches Bedienelement in Form eines Drehknebels Bedien-Befehle kapazitiv übermittelt. Dabei wird nämlich die Lage bzw. Drehstellung des Drehknebels auf einer Unterlage kapazitiv erfasst. Ebenso kann ein ganzes Elektrogerät durch die Erfindung geschaffen werden, das eine solche Bedieneinrichtung aufweist, insbesondere ein Kochfeld.

Somit ist es mit der Erfindung möglich, dass an einem üblichen Touch-Screen nicht nur mit Finger-Bedienung eine Eingabe erfolgen kann bzw. Bedien-Befehle erzeugt werden können für das Elektrogerät. Vielmehr kann auch zusätzlich mit dem weiteren darauf angeordneten Bedienelement eine Bedienung erfolgen. Dies ist für manche Bediener vorteilhafter bzw. wird bevorzugt, da quasi entsprechend den bekannten Drehschaltern tatsächlich ein Bedienelement in die Hand genommen und bewegt bzw. gedreht werden kann. Durch die kapazitiv erfolgende Signalübertragung über die kapazitiven Sensorelemente des Touch-Screen selbst braucht keine weitere aufwendige Sensorik vorgesehen zu werden.

In vorteilhafter Ausgestaltung der Erfindung ist die Halteeinrichtung so ausgebildet, dass das Bedienelement von dem Touch-Screen abgenommen bzw. entfernt werden kann. Dies kann vorteilhaft werkzeuglos erfolgen. So kann unter Umständen zum einen für Bedienvorgänge ohne das Bedienelement die zur Verfügung stehende Fläche des Touch-Screen vergrößert werden. Weitere Gründe sind Sicherheitsvorkehrungen sowie eine bessere Reinigung. Eine Halteeinrichtung kann vorteilhaft Haltemagnete hinter dem Touch-Screen einerseits und im Bedienelement andererseits aufweisen bzw. auf einer Seite einen Haltemagnet und auf der anderen Seite ein entsprechendes Metallteil oder magnetisches Element für eine lösbare Festlegung.

Des weiteren ist allgemein der Touch-Screen zumindest im Bereich des Bedienelements vorteilhaft unterbrechungsfrei und geschlossen ausgebildet. So sieht die Bedieneinrichtung und somit auch das Elektrogerät selbst bei abgenommenem Bedienelement zum einem optisch ansprechend aus, und zum anderen entstehen keine Dichtungsprobleme wegen Durchbrüchen odgl..

In vorteilhafter Ausgestaltung der Erfindung sind das Bedienelement und die Halteeinrichtung dafür ausgelegt, durch Drehbewegung und/oder Schiebebewegung bedient zu werden, besonders vorteilhaft eine Drehbewegung. Dazu weist die vorbeschriebene Halteeinrichtung vorteilhaft einen einzigen Magneten unter dem Touch-Screen auf bzw. ein einzelnes magnetisch ansprechendes Metallteil. Im Bedienelement ist dann das Gegenstück angeordnet. Besonders vorteilhaft kann ein Magnet bzw. Metallteil unter dem Touch-Screen durch die Halteeinrichtung odgl. befestigt werden oder vorzugsweise angeklebt werden. Er kann rundzylindrisch sein mit nicht zu großem Durchmesser, beispielsweise etwa 1cm bei einem Durchmesser des Bedienelements von etwa 3cm bis 8cm. Das Bedienelement kann dann um seinen Mittelpunkt als Drehachse gedreht werden bei der Bedienung.

In weiterer Ausgestaltung der Erfindung weist das Bedienelement an einer Vorderseite bzw. Stirnseite eine elektrisch leitfähige Fläche als Berührelement auf. Dieses Berührelement ist mit einer weiteren elektrisch leitfähigen Fläche an der Unterseite des Bedienelements zum Touch-Screen hin versehen. So ist es möglich, einen auf das Berührelement an der Vorderseite des Bedienelements aufgelegten Finger durch den Touch-Screen hindurch die kapazitive Sensormatrix anzukoppeln. Grundsätzlich ähnliches ist bereits aus der vorgenannten DE 10 2006 054 764 A1 bekannt. Dadurch können weitere Bedienbefehle ausgelöst werden. Durch Verwendung der kapazitiven Sensorelemente des Touch-Screen kann auch hier der Aufwand für eine weitere Sensor-Erkennung der Bedienung eingespart werden.

Vorteilhaft verläuft die genannte elektrische Verbindung zwischen Berührelement an der Vorderseite und elektrisch leitfähiger Fläche an der Unterseite innerhalb des Bedienelements selbst. Sie kann also sowohl elektrisch isoliert als auch unter Umständen von außen unsichtbar sein.

Das genannte Berührelement kann zentral an der Vorderseite bzw. Stirnseite des Bedienelements angeordnet sein. Dies kann auch für die elektrisch leitfähige Fläche an der Unterseite des Bedienelements gelten. Besonders vorteilhaft ist die elektrisch leitfähige Fläche an der Unterseite des Bedienelements Teil eines vorgenannten Magneten oder Metallteils zur magnetischen Kopplung mit der Halteeinrichtung unter dem Touch-Screen. Somit kann wegen der Drehung einer zentralen bzw. mittigen elektrisch leitfähigen Fläche an der Unterseite des Bedienelements immer dieselbe Stelle des Sensorelements des Touch-Screen die Bedienung erfassen bzw. das Auflegen eines Fingers an das Berührelement, da sie sich dann nicht relativ zum Touch-Screen bewegt, sondern nur um einen Punkt dreht.

In weiterer Ausgestaltung der Erfindung kann an einem Außenbereich bzw. Seitenrand des Bedienelements mindestens eine elektrisch leitfähige Fläche als weiteres Berührelement vorgesehen sein, beispielsweise auch zwei oder vier oder noch mehr. Sie kann zwar auch nur an einem Punkt vorgesehen sein, ist aber vorteilhaft umlaufend und ringartig ausgebildet. Dieses weitere Berührelement kann mit mindestens einer elektrisch leitfähigen Fläche an der Unterseite des Bedienelements elektrisch verbunden sein, beispielsweise auch zwei elektrisch leitfähige Flächen pro weiterem Berührelement. Eine kapazitive Kopplung eines auf das weitere Berührelement oben am Bedienelement gelegten Fingers über diese elektrisch leitfähigen Fläche an der Unterseite an den Touch-Screen kann erfolgen wie zuvor beschrieben. In diesem Fall ist es eine Möglichkeit, dass die elektrische Verbindung zwischen Berührelement und elektrisch leitfähiger Fläche an der Unterseite des Bedienelements außen am Außenrand des Bedienelements entlang verläuft bzw. angeordnet ist. Sie kann aber auch unsichtbar innerhalb des Bedienelements verlaufen oder bedeckt sein.

Ein solches weiteres Berührelement weist vorteilhaft die Aufgabe auf, dass es elektrisch bzw. kapazitiv sozusagen die Verlängerung des oben aufgelegten Fingers darstellt und somit der Touch-Screen eine Bewegung der Fläche an der Unterseite erkennt, wie wenn sie der Finger direkt auf dem Touch-Screen in derselben Form durchführen würde. So kann vorteilhaft die Erkennung der Bedienbewegung bzw. der Drehung des Bedienelements erfolgen. Durch die umlaufende, elektrisch leitfähige Fläche am Bedienelement wird sichergestellt, dass sie ein Bediener ergreift zum Drehen des Bedienelements und somit kein Auflegen eines Fingers auf eine zusätzliche Fläche als Bedienelement wie zuvor beschrieben extra notwendig ist. Ebenso kann durch die kapazitive Erkennung der Drehung bzw. Bewegung des Bedienelements durch den Touch-Screen samt Steuerung auf Magnetfeldsensoren odgl. verzichtet werden, wie sie im Stand der Technik verwendet werden.

Sowohl Berührelement als auch elektrisch leitfähige Fläche an der Unterseite des Bedienelements sind vorteilhaft außermittig angeordnet, besonders vorteilhaft maximalweit außen. So kann für das Berührelement am Außenrand des Bedienelements eine geschickte Platzierung mit zwingendem Fingerkontakt erreicht werden. Für die entsprechende elektrisch leitfähige Fläche an der Unterseite gilt dann, dass eine möglichst große Bewegungsbahn bei Bedienung durch Drehung entsteht und somit die Auflöse-Empfindlichkeit für den Touch-Screen bzw. dessen kapazitiven Sensorelemente am größten ist.

In vorteilhafter Ausgestaltung der Erfindung wird ein üblicher Touch-Screen verwendet bzw. ein Standardbauteil. Er wird lediglich mit der Halteeinrichtung versehen, besonders vorteilhaft eben einem Magnet. Dann wird der Touch-Screen unter einer Bedienblende oder Oberfläche eines Elektrogerätes angeordnet. Besonders vorteilhaft ist dies eine Glaskeramik-Platte bzw. Kochfeldplatte eines Kochfeldes als Elektrogerät.

Wie zuvor beschrieben, kann das Bedienelement vorteilhaft für eine Bedienung durch Drehung ausgebildet sein und dazu rotationssymmetrisch sein bzw. rund. Es kann besonders vorteilhaft die Form einer dicken Scheibe mit vorzugsweise ebener Oberseite bzw. Vorderseite haben.

In weiterer Ausgestaltung der Erfindung kann eine elektrische Verbindung des Touch-Screen an eine Steuereinrichtung des Elektrogeräts vorteilhaft über einen flexiblen Leiterträger realisiert werden. Die Steuerung für Ansteuerung und Auswertung des Touch-Screen ist vorteilhaft ein Microcontroller bzw. ein ASIC und ist besonders vorteilhaft auf diesem Leiterbahnträger angeordnet. Dazu kann er nahe an dem Touch-Screen angeordnet sein für kurze Signalwege und möglichst wenig Störungen. Die Verbindung zur Steuerung des Elektrogerätes kann ein LIN-Bus sein.

Symbole für eine Bedienperson zur Anzeige möglicher Bedienbefehle, sonstiger Informationen oder Rückmeldungen können unter dem durchsichtigen Touch-Screen beliebig angezeigt werden, wie es an sich bekannt ist durch optische Anzeigeelemente darunter. Durch Drehen oder Schieben des Bedienelementes, was kapazitiv erfasst wird, können dann quasi angezeigte Bedienoptionen als Bedienbefehle ausgewählt werden. Hierfür ist zusätzlich zu dem Touch-Screen einerseits und dem Bedienelement darauf andererseits nichts weiter notwendig. So kann eben sehr leicht eine Erweiterung der Funktionalität eines Touch-Screen erreicht werden. Es ist quasi lediglich die Halteeinrichtung am Touch-Screen vorzusehen, da die Erkennung der Bewegung bzw. Drehung des Bedienelements über die ohnehin vorhandenen und dazu ausgebildeten kapazitiven Sensorelemente des Touch-Screen erfolgen kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf eine erfindungsgemäße Bedieneinrichtung mit einem drehbaren und verschiebbaren Bedienelement,
- Fig. 2: einen seitlichen Schnitt durch die Bedieneinrichtung aus Fig. 1,
- Fig. 3: eine Schrägansicht des Bedienelements,
- Fig. 4: einen weiteren Teilschnitt durch das Bedienelement,
- Fig. 5: eine Ansicht des Bedienelements von unten und
- Fig. 6: eine Darstellung ähnlich Fig. 1 mit Bewegungsmustern einer elektrisch leitfähigen Fläche an der Unterseite des Bedienelements an der Bedieneinrichtung aus Fig. 1.

### Detaillierte Beschreibung des Ausführungsbeispiels

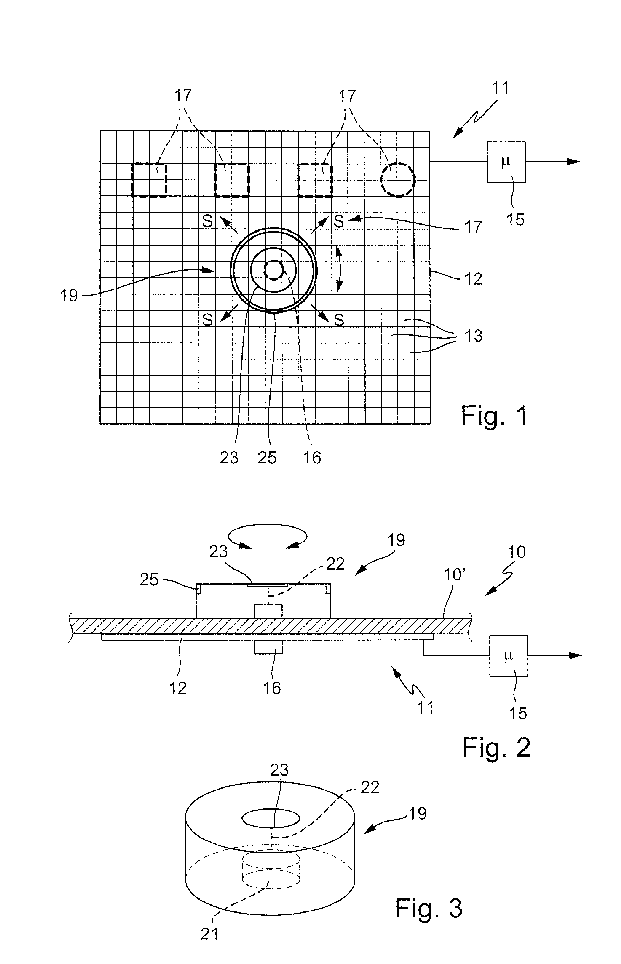

In der Fig. 1 ist in Draufsicht eine erfindungsgemäße Bedieneinrichtung 11 für ein aus Fig. 2 ersichtliches erfindungsgemäßes Kochfeld 10 dargestellt. Die Bedieneinrichtung 11 weist einen kapazitiv arbeitenden Touch-Screen 12 auf, wie er beispielsweise aus der eingangs genannten DE 10 2006 039 235 A1 bekannt ist. Die einzelnen kapazitiven Sensorelemente des Touch-Screen 12 sind durch das dargestellte Gitter als einzelne, aneinander anschließende Quadrate verdeutlicht. Diese kapazitiven Sensorelemente 13 können somit, wie bei einem Touch-Screen üblich, das Auflegen eines Fingers an jeder Stelle des Touch-Screen 12 erkennen. Dazu ist eine Steuerung 15 vorgesehen, die einen Microcontroller aufweist und mit einer sonstigen Steuereinrichtung des Kochfelds 10 verbunden ist.

Entlang einer oberen Reihe sind mehrere Markierungen 17 auf dem Touch-Screen 12 bzw. entsprechend Fig. 2 auf einer Kochfeldplatte 10' aus Glaskeramik, unter der der Touch-Screen 12 angeordnet ist, dargestellt. Sie können beispielsweise auf übliche Art und Weise durch Aufdruck erzeugt sein. Als weitere Möglichkeit können die Markierungen 17 auch nicht-permanent vorgesehen sein, sondern durch nicht näher dargestellte, dem Fachmann aber bekannte Anzeigeelemente unter dem Touch-Screen 12 erzeugt bzw. angezeigt werden. Wird ein Finger auf eine dieser Markierungen 17 gelegt, so kann der Touch-Screen 12 dies durch die jeweiligen darunterliegenden kapazitiven Sensorelemente 13 erkennen und als entsprechende Bedienung auswerten.

Des weiteren befindet sich auf der Bedieneinrichtung 11 bzw. der Kochfeldplatte 10', wie die Fig. 2 zeigt, ein Drehknebel 19 als Bedienelement, der die Form einer dicken Scheibe hat. Er kann alternativ auch gewölbt oder hutförmig sein. Der Drehknebel 19 ist um einen Mittelpunkt drehbar sowie, wie in Fig. 1 dargestellt ist, in vier Richtungen auf die Markierungen 17' "S" zu verschiebbar.

Bezüglich des Aufbaus des Drehknebels 19 wird neben den Fig. 1 und 2 auf die weiteren Fig. 3 bis 5 verwiesen, die in ihrer Gesamtheit beschrieben werden sollen. Der Drehknebel 19 weist an seiner Unterseite im Inneren einen zentralen Magneten 21 auf, der vorteilhaft, wie Fig. 3 zeigt, nach Art einer dicken Scheibe ausgebildet ist und möglichst stark sein sollte. Er weist eine gestrichelt dargestellte elektrisch leitfähige Verbindung 22 im Inneren des Drehknebels 19 zu einer an der Oberseite mittig angeordneten elektrisch leitfähigen Fläche 23 als erstes Berührelement 23 auf. So kann beispielsweise der Drehknebel 19 aus isolierendem Kunststoff hergestellt sein und sowohl der zentrale Magnet 21 als auch die elektrisch leitfähige Verbindung 22 und das erste Berührelement 23 darin eingegossen sein.

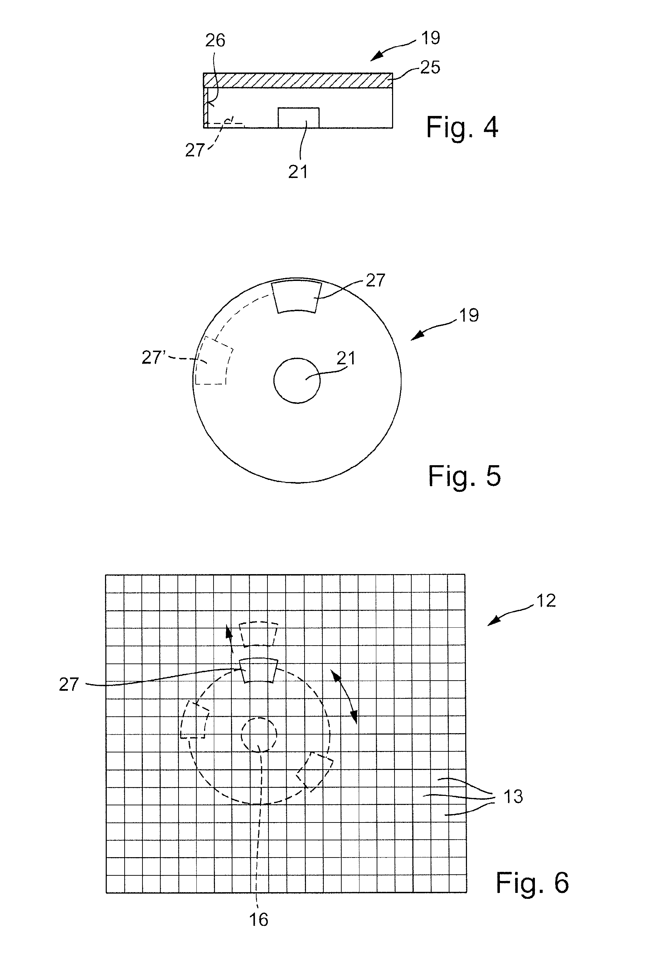

Des weiteren weist der Drehknebel 19 an einer Außenseite einen umlaufenden Berührring 25 auf, der sowohl einen umlaufenden oberen Bereich der Seitenwand des Drehknebels 19 bildet als auch, wie die Fig. 1 zeigt, eine gewisse Dicke hat. Somit wird sichergestellt, dass er auch beim Anfassen mit einem Finger schräg auf die Kante zu berührt wird. Dieser Berührring 25 weist eine elektrisch leitfähige Verbindung 26 an eine elektrisch leitfähige Fläche 27 an der Unterseite des Drehknebels 19 auf. Diese elektrisch leitfähige Fläche 27 hat entsprechend Fig. 5 die Form eines Kreisringsegments. Sie kann jedoch abweichend davon auch eine rechteckige bzw. quadratische oder runde Form aufweisen, beispielsweise entsprechend der Berührfläche eines aufgelegten Fingers, also mit etwa 1 cm Durchmesser. Entsprechend kann auch die hier dargestellte elektrisch leitfähige Fläche 27 in etwa 1cm² groß sein.

Berührring 25, elektrisch leitfähige Verbindung 26 und elektrisch leitfähige Fläche 27 können, wie zuvor beschrieben, in einen Drehknebel 19 aus Kunststoff eingespritzt sein. Während der Berührring 25 außen liegend und gut zugänglich sein muss, gilt dies für die elektrisch leitfähige Verbindung 26 und die Fläche 27 nicht. Vor allem die Fläche 27 kann, ähnlich wie der zentrale Magnet 21, an der Unterseite des Drehknebels 19 sichtbar sein oder auch nicht, beispielsweise von einer dünnen Beschichtung oder Abdeckung überdeckt sein. Wie in Fig. 5 gestrichelt dargestellt ist, kann auch eine zweite Fläche 27´ an der Unterseite vorgesehen und mit der anderen Fläche 27 bzw. dem Berührring 25 verbunden sein. Diese zweite Fläche 27´ wird später näher erläutert.

### Funktion

Es ist leicht vorstellbar, dass bei Auflegen eines Fingers auf das erste Berührelement 23 am Drehknebel 19 mittels der elektrisch leitfähigen Verbindung 22 der elektrisch leitfähige zentrale Magnet 21 quasi als berührt wirkt und erkannt wird. Somit liegt ein Fall vor, wie wenn ein Finger nicht an dem ersten Berührelement 23 aufgelegt wird, sondern anstelle des zentralen Magneten 21 oberhalb des Haltemagneten 16 und vor allem oberhalb des Touch-Screen 12 bzw. auf diesen. Die an dieser Stelle vorgesehenen kapazitiven Sensorelemente 13 des Touch-Screen 12 können quasi dieses Auflegen erkennen und so kann eine Art Schaltfunktion mittels des ersten Berührelements 23 am Drehknebel 19 erreicht werden.

Zur Erkennung einer Drehung oder sonstigen Bewegung des Drehknebels 19 wird ein Bediener zwangsläufig den Drehknebel 19 am oberen Außenrand fassen und damit den Berührring 25 berühren. Mittels der elektrisch leitfähigen Verbindung 26 ist es dann so, wie wenn die elektrisch leitfähige Fläche 27 an der Unterseite des Drehknebels 19 berührt wäre bzw. der Finger direkt auf die Unterlage des Drehknebels 19 gelegt wird. Wie Fig. 6 zeigt, bewegt sich bei einer Drehung des Drehknebels 19 die elektrisch leitfähige Fläche 27 entlang der gestrichelt dargestellten Kreisbahn um den Haltemagneten 16 der Bedieneinrichtung 11 herum. Zwei unterschiedliche Stellungen der elektrisch leitfähigen Fläche 27 sind gepunktet dargestellt, wobei der Drehknebel 19 für die gepunktet dargestellte Stellung rechts unten etwa 130° im Uhrzeigersinn gedreht worden ist, was die Steuerung entsprechend der überfahrenen Bahn und mittels der kapazitiven Sensorelemente registrieren kann. Die Steuerung 15 erkennt also auch den Bewegungsweg und nicht nur die Endstellungen, während berührt worden ist.

Für die gepunktet dargestellte Stellung links unten ist er knapp 270° im Uhrzeigersinn gedreht worden. Für den Touch-Screen 12 bzw. dessen Steuerung 15 ist es also so, wie wenn ein Finger anstelle der elektrisch leitfähigen Fläche 27 entlang der gestrichelten Kreisbahn bewegt werden wird. Dies kann der Touch-Screen entsprechend einer sonstigen Bewegung eines aufgelegten Fingers leicht erkennen und die Steuerung 15 gibt entsprechende Bedienbefehle an eine nicht dargestellte Steuereinrichtung des Kochfelds 10 weiter entsprechend der erkannten Drehung.

Mit der alternativ noch vorgesehenen weiteren zweiten Fläche 27´ an der Unterseite des Drehknebels 19, die ebenfalls mit dem Berührring 25 verbunden ist, kann bei einem Touch-Screen, der mindestens zwei separate Berührpunkte erfassen kann, erreicht werden, dass eine Drehung des Drehknebels 19 von einer Verschiebung oder sonstigen Bewegung unterschieden werden kann. Die Bewegung der Fläche 27 von der Position oben zu einer Position um 90° nach rechts verdreht könnte auch anstatt mittels einer Drehung durch ein Verschieben bewirkt werden. Dies ist aber etwas ganz anderes als die Drehung. Bei der zweiten Fläche 27´ kann also ebenfalls die Bewegung ausgewertet werden. Nur wenn sich die zweite Fläche 27´ ebenfalls um den Drehpunkt bewegt anstelle einer linearen Bewegung wie bei der ersten Fläche 27 liegt eine Drehung vor. So kann die Steuerung 15 also zuverlässig eine Drehung erkennen. Dazu kann die zweite Fläche 27´ wie dargestellt um 90° oder auch um mehr oder weniger gegenüber der ersten Fläche 27 verdreht sein, beispielsweise auch um 180°.

Des weiteren ist in Fig. 6 dargestellt, wie der Drehknebel 19 ein Stück nach oben geschoben werden kann als lineare Bewegung, so dass die elektrisch leitfähige Fläche 27 an der oberen gepunkteten Stellung ist. Auch diese Bewegung kann von den kapazitiven Sensorelementen 13 des Touch-Screen 12 problemlos erkannt werden und mittels der Steuerung 15 in einen entsprechenden Bedienbefehl umgesetzt werden. Für diese Linearbewegung anstelle der vorbeschriebenen rotatorischen Bewegungen um den Haltemagnet 16 herum wird zwar die magnetische Kopplung zwischen Haltemagnet 16 und zentralem Magnet 21 im Drehknebel 19 zwar geschwächt bzw. sogar unterbrochen. Der Schiebeweg sollte jedoch nur so groß gewählt werden, dass diese Unterbrechung nicht auftritt. Dies ermöglicht im Übrigen ja auch ein problemloses Abnehmen des Drehknebels 19 von der Bedieneinrichtung 11 bzw. dem Kochfeld 10 zu Reinigungszwecken oder aus Sicherheitsgründen. Jedenfalls wird nach einem Loslassen des Drehknebels 19 die Anziehungskraft zwischen den beiden Magneten 16 und 21 dafür sorgen, dass der Drehknebel 19 wieder in die in Fig. 1 und dargestellte Stellung quasi zurückschnappt bzw. sich automatisch zurückbewegt.

Somit ist offensichtlich, dass das Vorsehen des Berührrings 25 samt elektrisch leitfähiger Verbindungen 26 und elektrisch leitfähiger Fläche 27 an der Unterseite des Drehknebels 19 bei Bewegen des Drehknebels 19 auf dem Touch-Screen 12 bzw. dem Kochfeld 10 so wirkt, wie wenn ein Finger direkt auf der Kochfeldplatte 10' über dem Touch-Screen 12 bewegt wird aufgrund der elektrischen Kopplung. Es kann also nur mit dem Touch-Screen 12 eine allgemeine Bewegung des Drehknebels 19 erkannt werden, sowohl als Rotation als auch als Schiebebewegung. Die zusätzlichen konstruktiven Maßnahmen am Touch-Screen 12 beschränken sich auf das Vorsehen des Haltemagneten 16 und entsprechende Programmierung an der Steuerung 15 bezüglich der Auswertung der empfangenen Signale. Darunter können allgemein Anzeigen durch Beleuchtung vorgesehen sein, mit dem Positionen oder Symbole angezeigt werden können.

Mittels des ersten Berührelements 23 am Drehknebel samt elektrisch leitfähiger Verbindung 22 an den zentralen Magneten 21, der hauptsächlich der Halterung bzw. Zentrierung des Drehknebels 19 dient, kann eine weitere Schaltfunktion an dem Drehknebel 19 selbst realisiert werden über die kapazitiven Sensorelemente 13 des Touch-Screen 12. Hier ist es, wie die Fig. 1 und 6 andeuten, zwar möglicherweise immer dieselben Sensorelemente 13 genau oberhalb des Haltemagneten 16, die das Berühren des ersten Berührelements 23 mit dem Finger als Schaltfunktion registrieren. Dies stört aber keineswegs, da so auf alle Fälle sicher eine Berührung erkannt werden kann.

In weiterer möglicher Ausgestaltung der Erfindung können noch weitere Berührelemente am Drehknebel 19 vorgesehen sein entsprechend dem ersten Berührelement 23. Sie können unterschiedlich verteilt sein und der Touch-Screen 12 kann dann aus der bekannten Drehstellung und der relativen Lage einer zu einem Berührelement gehörenden elektrisch leitfähigen Fläche an der Unterseite des Drehknebels 19 eine Position ermitteln und somit eine bestimmte Schaltfunktion bzw. Bedien-Befehl. Hier sind Grenzen gesetzt nur durch eine mögliche Auflösung mittels der kapazitiven Sensorelemente 13 am Touch-Screen 12.

## Patentansprüche

1. Bedieneinrichtung für ein Elektrogerät, wobei die Bedieneinrichtung einen flächigen, kapazitiv arbeitenden Touch-Screen mit einer Steuerung aufweist zur Bedienung durch Auflegen oder Bewegen eines Fingers auf dem Touch-Screen, **dadurch gekennzeichnet, dass** an oder über dem Touch-Screen eine Halteeinrichtung für ein bewegbares Bedienelement darauf angeordnet ist zur zusätzlichen Eingabe von Bedien-Befehlen, und dass das Bedienelement so ausgebildet ist, dass eine Signalübertragung von dem Bedienelement kapazitiv erfolgt bzw. eine Bedienung mittels des Bedienelements von dem kapazitiven Touch-Screen erfassbar ist.

2. Bedieneinrichtung nach Anspruch 1, **dadurch gekennzeichnet, dass** die Halteeinrichtung so ausgebildet ist, dass das Bedienelement von dem Touch-Screen abnehmbar bzw. entfernbar ist, vorzugsweise werkzeuglos.

3. Bedieneinrichtung nach Anspruch 2, **dadurch gekennzeichnet, dass** die Halteeinrichtung Haltemagnete hinter dem Touch-Screen und im Bedienelement aufweist und der Touch-Screen zumindest im Bereich des Bedienelements unterbrechungsfrei geschlossen ausgebildet ist.

4. Bedieneinrichtung nach einem der vorhergehenden Ansprüche, **dadurch gekennzeichnet, dass** das Bedienelement und die Halteeinrichtung dafür zur Bedienung durch eine Drehbewegung ausgebildet sind.

5. Bedieneinrichtung nach Anspruch 4 und 2 oder 3, **dadurch gekennzeichnet, dass** die Halteeinrichtung nach Anspruch 2 einen einzigen Magnet unter dem Touch-Screen aufweist zur Drehung des Bedienelements um dessen Mittelpunkt als Drehachse.

6. Bedieneinrichtung nach einem der vorhergehenden Ansprüche, **dadurch gekennzeichnet, dass** das Bedienelement an einer Vorderseite bzw. Stirnseite mindestens eine elektrisch leitfähige Fläche als Berührelement aufweist, das mit einer weiteren elektrisch leitfähigen Fläche an der Unterseite des Bedienelements zum Touch-Screen hin ausgebildet ist zur kapazitiven Kopplung eines auf das Berührelement an der Vorderseite aufgelegten Fingers an den Touch-Screen.

7. Bedieneinrichtung nach Anspruch 6, **dadurch gekennzeichnet, dass** die elektrische Verbindung zwischen Berührelement und elektrisch leitfähiger Fläche innerhalb des Bedienelements verläuft.

8. Bedieneinrichtung nach Anspruch 6 oder 7, **dadurch gekennzeichnet, dass** das Berührelement zentral an der Vorderseite bzw. Stirnseite angeordnet ist und die elektrisch leitfähige Fläche an der Unterseite des Bedienelements ebenso.

9. Bedieneinrichtung nach einem der vorgehenden Ansprüche, **dadurch gekennzeichnet, dass** an einem Außenbereich bzw. Seitenrand des Bedienelements eine elektrisch leitfähige Fläche als weiteres Berührelement vorgesehen ist, das verbunden ist mit einer elektrisch leitfähigen Fläche an der Unterseite des Bedienelements zur kapazitiven Kopplung eines auf das weitere Berührelement des Bedienelements gelegten Fingers an den Touch-Screen.

10. Bedieneinrichtung nach Anspruch 9, **dadurch gekennzeichnet, dass** die elektrisch leitfähige Fläche als weiteres Berührelement umlaufend ringartig ist.

11. Bedieneinrichtung nach Anspruch 9 oder 10, **dadurch gekennzeichnet, dass** die elektrische Verbindung zwischen Berührelement und elektrisch leitfähiger Fläche außen am Außenrand des Bedienelements entlang verläuft.

12. Bedieneinrichtung nach einem der Ansprüche 9 bis 11, **dadurch gekennzeichnet, dass** die elektrisch leitfähige Fläche an der Unterseite des Bedienelements und das entsprechende Berührelement außermittig angeordnet sind, vorzugsweise das Berührelement am Außenrand entlang und die entsprechende elektrisch leitfähige Fläche unten an diesen Außenrand angrenzend.

13. Bedieneinrichtung nach einem der vorhergehenden Ansprüche, **dadurch gekennzeichnet, dass** das Bedienelement rotationssymmetrisch ausgebildet ist bzw. rund ausgebildet ist.

14. Bedieneinrichtung nach einem der vorhergehenden Ansprüche, **dadurch gekennzeichnet, dass** der Touch-Screen ein üblicher Touch-Screen ist bzw. ein Standardbauteil und mit der Halteeinrichtung versehen ist und unter einer Bedienblende oder Oberfläche eines Elektrogerätes angeordnet ist, insbesondere unter einer Glaskeramik-Platte eines Kochfeldes als Elektrogerät.

15. Bedieneinrichtung nach einem der vorhergehenden Ansprüche, **dadurch gekennzeichnet, dass** eine elektrische Verbindung des Touch-Screen an eine Steuereinrichtung des Elektrogeräts über einen flexiblen Leiterbahnträger ausgebildet ist und die Steuerung für Ansteuerung und Auswertung des Touch-Screen ein Microcontroller bzw. ASIC ist und auf diesem Leiterbahnträger angeordnet ist, insbesondere nahe an dem Touch-Screen.
